Europäisches Patentamt

European Patent Office

Office européen des brevets

(11) Veröffentlichungsnummer: **0 486 971 B1**

# EUROPÄISCHE PATENTSCHRIFT

(45) Veröffentlichungstag der Patentschrift: **26.04.95**

(51) Int. Cl.6: **B08B 15/02**

(21) Anmeldenummer: **91119550.1**

(22) Anmeldetag: **15.11.91**

(54) **Abzug mit Einströmprofil.**

(30) Priorität: **19.11.90 DE 4036845**

(43) Veröffentlichungstag der Anmeldung:
**27.05.92 Patentblatt 92/22**

(45) Bekanntmachung des Hinweises auf die
Patenterteilung:
**26.04.95 Patentblatt 95/17**

(84) Benannte Vertragsstaaten:
**AT BE CH DE ES FR GB LI NL**

(56) Entgegenhaltungen:
**DE-A- 3 617 821**
**DE-C- 635 568**
**GB-A- 1 595 840**

(73) Patentinhaber: **WALDNER LABOREINRICHTUN-
GEN GmbH & Co.**
**Postfach 15 62**
**D-88231 Wangen (DE)**

(72) Erfinder: **Kreuzer, Konrad**
**Vomerweg 29**
**W-8969 Dietmannsried (DE)**
Erfinder: **Liebsch, Jürgen**
**Grossholz 15**
**W-8998 Lindenberg (DE)**
Erfinder: **Schubert, Bernd**
**Parsifalstrasse 42**
**W-8500 Nürnberg (DE)**

(74) Vertreter: **WILHELMS, KILIAN & PARTNER Patentanwälte**
**Eduard-Schmid-Strasse 2**
**D-81541 München (DE)**

## Beschreibung

Die Erfindung betrifft einen Abzug nach dem Gattungsbegriff des Anspruchs 1. Ein derartiger Abzug ist aus der DE 3 510 647 A1 bekannt.

Abzüge sind Arbeitsschutzeinrichtungen für Arbeiten z.B. in Labors, bei denen Gase, Dämpfe oder Staube in gefährlicher Menge oder Konzentration auftreten können. Zur Erzielung einer Schutzwirkung ist der Arbeitsraum, d. h. der Raum über der Arbeitsfläche, die im allgemeinen die Bodenfläche des Gehäuses ist, allseitig umschlossen und an ein Entlüftungssystem angeschlossen. Der Arbeitsraum ist über eine in der Höhe verstellbare Schiebetür, beispielsweise in Form einer Frontscheibe zugänglich, die vertikal zwischen einer den Arbeitsraum schließenden und einer den Arbeitsraum an der offenen Seite zugänglich machenden Stellung bewegbar ist.

Aufgrund der vielseitigen Aufgaben sollten Abzüge den folgenden Bedingungen genügen:

a) Es sollte eine schnelle und wirbelfreie Absaugung des Arbeitsraumes bei geschlossener Schiebetür gewährleistet sein.

b) Die vor dem Abzug stehende Arbeitsperson sollte keiner Verletzungsgefahr durch Splitter beispielsweise bei einer Verpuffung im Arbeitsraum ausgesetzt sein, wenn das Schiebefenster geschlossen ist.

c) Bei einer vertikalen Bewegung der Schiebetür dürfen keine Dämpfe austreten.

d) Bei vollständig geöffneter Schiebetür dürfen keine Schadstoffe austreten, was insbesondere für schwere Gase gilt, die aufgrund der geringen Einströmgeschwindigkeit nach außen treten könnten.

Um diesen Bedingungen zu genügen werden herkömmliche Abzüge mit horizontalem Einströmschlitz ausgebildet, die derart aufgebaut sind, daß das Griffprofil an der Vorderkante der Schiebetür in einem gegebenen Abstand von beispielsweise ca. 50 mm vor der Tischplatte oder dem Boden des Gehäuses des Abzuges endet. Derartige Abzüge mit horizontalem Einströmschlitz sind beispielsweise aus der GB-A-1 595 840 und der DE-A-3 617 821 bekannt, wobei der aus der GB-A-1 595 840 bekannte Abzug an der Vorderkante seines Bodens eine fluzeugtrageflächenartige Verkleidung aufweist, über die und unter der die Luft in divergenten Strömen in der Abzug strömt. Bei einer derartigen Ausbildung strömt Primärluft waagerecht in den Abzug, wo sie einen Wirbel, d. h. eine mit waagerechter Achse rotierende walzenartige Strömung bildet.

Ein Abzug mit einem derartigen Aufbau hat Vorteile aufgrund der waagerechten Einströmung der Luft, weist aber den entscheidenden Nachteil auf, daß die Verletzungsgefahr einer vor dem Abzug stehenden Person, d. h. insbesondere der Splitterschutz nicht gewährleistet ist, da die Schiebetür niemals vollständig geschlossen ist und immer ein Spalt zwischen dem vorderen Ende der Schiebetür und dem Boden des Arbeitsraumes offen steht.

Um diesen Körperschutz zu gewährleisten, kann bei Abzügen mit vertikalem Einströmschlitz die Schiebetür vor der Tischplatte bzw. dem Boden des Abzuges heruntergezogen werden, so daß ein vertikaler Einströmschlitz entsteht. Bei einem derartigen Abzug strömt die Primärluft mit einer starken Vertikalkomponente in den Arbeitsraum des Abzuges. Diese Vertikalkomponente stützt sich dabei bodenseitig auf einem turbulenten Wirbelgebiet ab. Diese entsteht aufgrund von Strömungsablösungen an der Bodenkante. Daraus ergibt sich eine stabile Strömung, die weit in das Abzugsinnere reicht. Diese Strömung, die schräg nach oben gerichtet ist, stößt mit der abwärts gerichteten Strömung des im Arbeitsraum gebildeten Wirbels mit horizontaler Achse, d. h. der sogenannten Raumwalze zusammen. Das hat zur Folge, daß zwei Wirbelgebiete entstehen, von denen sich eines an der Vorderkante der Bodenplatte und eines oberhalb des Griffprofils befindet. Damit ist die großräumige Strömung im Innenraum des Abzuges gestört. An den Wirbelbereichen sammeln sich darüberhinaus Schadstoffe an, da diese einen ortsfesten Wirbel bilden und nicht zu den Absaugschlitzen geführt werden.

Beim Öffnen der Schiebetür entsteht während des Öffnens durch Druckverschiebungen ein instabiler Zustand, so daß dann diese Schadstoffe austreten können. Erst wenn die Schiebetür geöffnet ist, kann sich wieder ein stabiler Zustand einstellen, der eine Absaugung der Schadstoffe erlaubt.

Die der Erfindung zugrunde liegende Aufgabe besteht demgegenüber darin, den Abzug nach dem Gattungsbegriff des Anspruchs 1 so auszubilden, daß sich eine stabile Strömung bei geschlossener Schiebetür, d. h. bei gewährleistetem Körperschutz einstellt, ohne daß es bei einer Bewegung der Schiebetür zu Störungen kommt und ohne daß bei vollständig geöffneter Schiebetür Gase aus dem Innenraum des Abzuges austreten können.

Diese Aufgabe wird gemäß der Erfindung durch die Ausbildung gelöst, die im Kennzeichen des Anspruchs 1 angegeben ist.

Aufgrund der erfindungsgemäßen Ausbildung der Vorderkante des Bodens des Gehäuses in Form eines Flugzeugtragflächenprofils stellt sich bei geschlossener Schiebetür ein ungestörter Wirbel in Form einer Strömungswalze mit horizontaler Achse im Innenraum des Abzuges ein, wie er bei einem Abzug mit horizontaler Einströmung ausgebildet wird, wobei jedoch gleichzeitig der bei einem Abzug mit vertikalem Einströmschlitz aufgrund der geschlossenen Schiebetür gegebene Personenschutz gewährleistet ist.

Besonders bevorzugte Weiterbildungen und Ausgestaltungen des erfindungsgemäßen Abzuges sind Gegenstand der Ansprüche 2 bis 5.

Im folgen wird anhand der zugehörigen Zeichnung ein besonders bevorzugtes Ausführungsbeispiel der Erfindung näher beschrieben. Es zeigen

Fig. 1 eine schematische Schnittansicht des Ausführungsbeispiels des erfindungsgemäßen Abzuges,

Fig. 2 in einer schematischen Schnittansicht die Ausbildung der Einströmdüse bei dem in Fig. 1 dargestellten Ausführungsbeispiel im einzelnen,

Fig. 3 das in Fig. 1 dargestellte Ausführungsbeispiel bei halbgeöffneter Schiebetür,

Fig. 4 ein Ausführungsbeispiel eines herkömmlichen Abzuges mit horizontalem Einströmschlitz,

Fig. 5 ein Ausführungsbeispiel eines herkömmlichen Abzuges mit vertikalem Einströmschlitz,

Fig. 6 die Strömungsverhältnisse am Einströmschlitz bei dem in Fig. 5 dargestellten herkömmlichen Abzug im einzelnen und

Fig. 7 die im Vergleich dazu erzielten Strömungsverhältnisse bei dem in Fig. 1 dargestellten Ausführungsbeispiel des erfindungsgemäßen Abzuges.

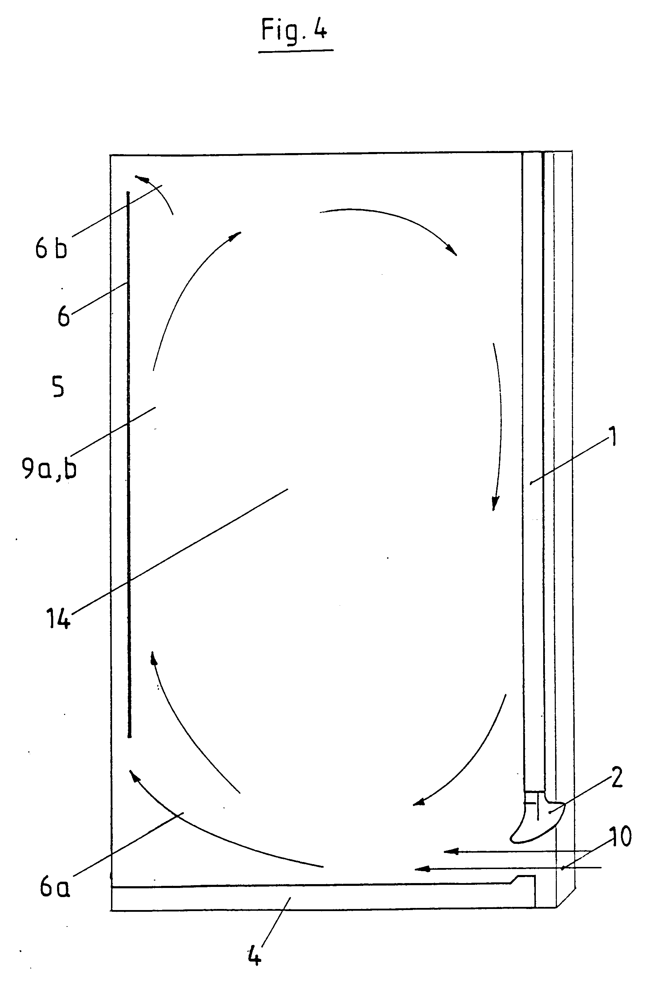

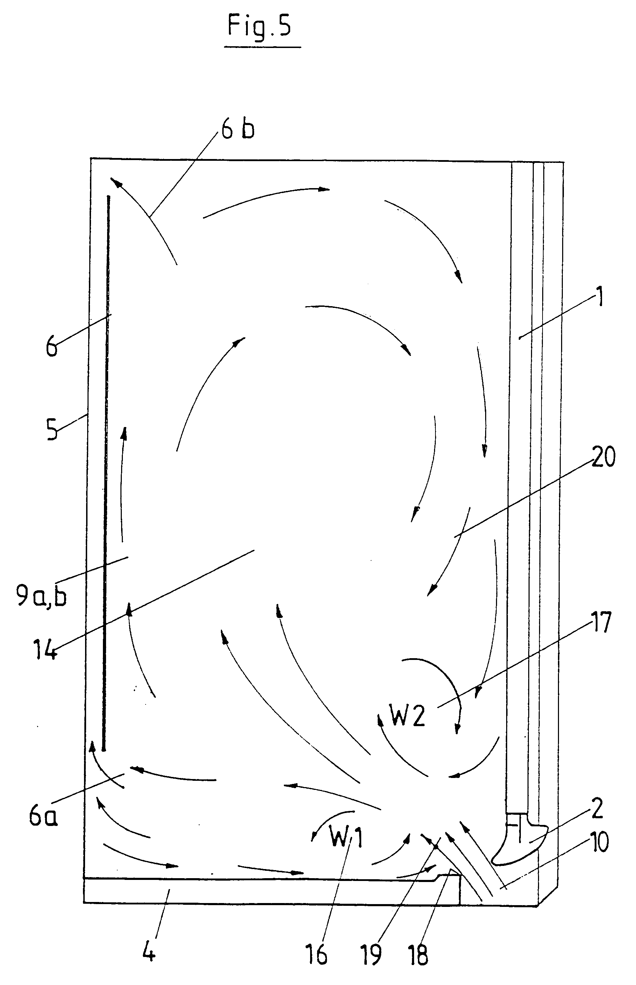

In den Fig. 4 und 5 sind Beispiele von herkömmlichen Abzügen mit horizontalem Einströmschlitz und vertikalem Einströmschlitz jeweils dargestellt.

Derartige Abzüge bestehen aus einem im wesentlichen kastenartigen Gehäuse, das mit seinen Seiten 9a, 9b, seiner Rückwand 5, seinem Boden oder seiner Arbeitsfläche 4 und der Schiebetür 1 den Arbeitsraum 14 umschließt.

Der Innenraum derartiger Abzüge wird zu einem Entlüftungssystem über einen Anschlußstutzen entlüftet. Dazu weist die Rückwand eine vorgesetzte Luftleitwand 6 auf, die den Abluftvolumenstrom in einen unteren Absaugstrom 6a und einen oberen Absaugstrom 6b unterteilt. Durch den Unterdruck im Arbeitsraum 14 wird frische Primärluft von außen angesaugt. Ein Teil der angesaugten Primärluft 10 wird in den unteren Schlitz für den unteren Absaugstrom 6a gesaugt während der Rest an der Luftleitwand 6 aufsteigt. Ein weiterer Teil wird über den oberen Absaugstrom 6b am oberen Spalt abgesaugt. Die restliche Luft streicht an der Abzugsdecke nach vorne und strömt dann vertikal an der Schiebetür 1 nach unten. Diese Luft wird vom Griffprofil 2 und der nachströmenden Primärluft nach innen gelenkt. Im Abzug ergibt sich somit eine um eine horizontale Achse rotierende Strömung, d. h. eine sogenannte Raumwalze, die von der Primärluft angehoben wird. Kontaminierte Luft 12, die aufgrund von Arbeiten im Abzug entsteht und mit der Strömung mitbewegt wird, wird mit den Absaugströmen 6a, 6b ausgedünnt.

Wie es in Fig. 4 dargestellt ist, ergibt sich ein derartiger Strömungsverlauf bei einem Abzug mit horizontalem Einströmschlitz, bei dem das Griffprofil 2 an der Vorderkante der Schiebetür 1 in einem bestimmten Abstand über dem Boden des Abzuges endet. Dieser Aufbau hat allerdings den Nachteil, daß aufgrund der Tatsache, daß die Schiebetür 1 niemals vollständig geschlossen ist und immer ein nach vorne gerichteter horizontaler Spalt offen bleibt, der notwendige Personen-, d. h. Splitterschutz nicht gewährleistet ist.

Wie es in Fig. 5 dargestellt ist, kann bei einem Abzug mit vertikalem Einströmschlitz der notwendige Körperschutz gewährleistet sein, da die Schiebetür 1 bis zur Bodenplatte heruntergezogen werden kann, so daß sich ein vertikaler Einströmschlitz ergibt.

Wie es in Fig. 5 dargestellt ist, tritt bei einem derartigen Abzug die Primärluft 10 jedoch mit einer starken Vertikalkomponente in den Innenraum des Abzuges, die sich bodenplattenseitig auf einem turbulenten Wirbelgebiet 19 abstützt, das aufgrund von Strömungsablösungen an der Bodenvorderkante 18 entsteht. Dadurch ergibt sich eine stabile Strömung 10, die weit in das Abzugsinnere reicht. Diese Strömung 10, die schräg nach oben verläuft, stößt auf eine abwärts gerichtete Strömung 20 der im Inneren sich ausbildenden sogenannten Raumwalze. Dadurch entstehen zwei starke Wirbelgebiete W1, W2 nämlich das Wirbelgebiet 16 an der Vorderkante der Bodenplatte und das Wirbelgebiet 17 oberhalb des Einströmschlitzes, d. h. des Griffprofils 2 an der Vorderkante der Schiebetür 1. Das bedeutet, daß die großräumige Strömung im Abzug gestört ist und sich an den Wirbelgebieten Schadstoffe ansammeln, die nur ungenügend abgesaugt werden.

Beim Öffnen der Schiebetür 1 wird sich während des Öffnungsvorgangs ein instabiler Zustand mit Schadstoffaustritt einstellen und werden sich erst nach dem Öffnen der Schiebetür wieder stabile Verhältnisse ergeben.

Dadurch entsteht ein Wirbelgebiet 16, das bis in den Bereich der Fläche 21 ragt. Die Schadstoffe gelangen damit ebenfalls in die Randzone, so daß sie bei einer Bewegung der Schiebetür 1 oder bei einem vollständigen Öffnen der Schiebe-tür 1 austreten.

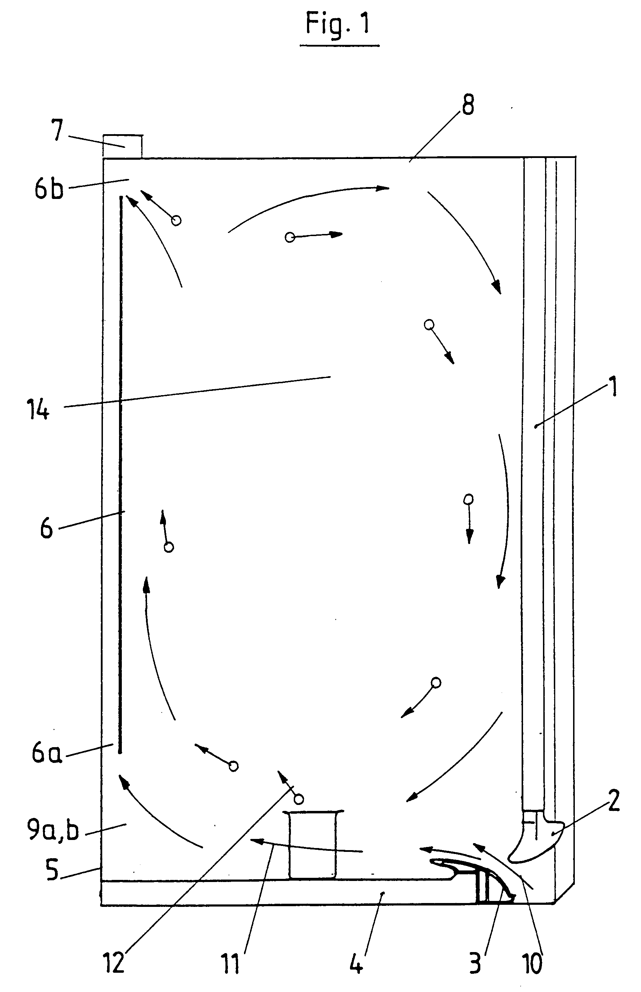

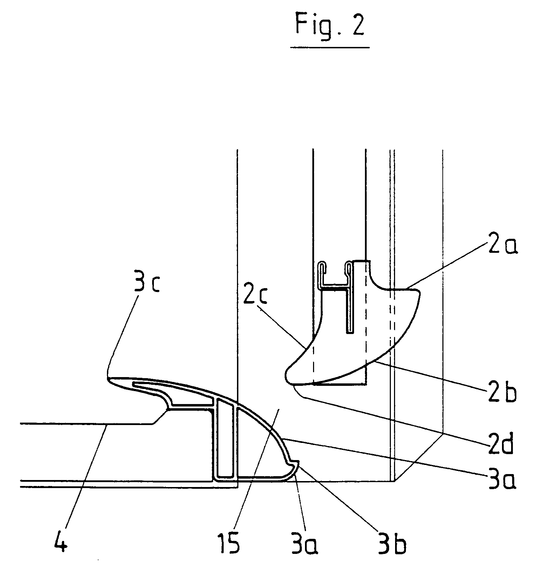

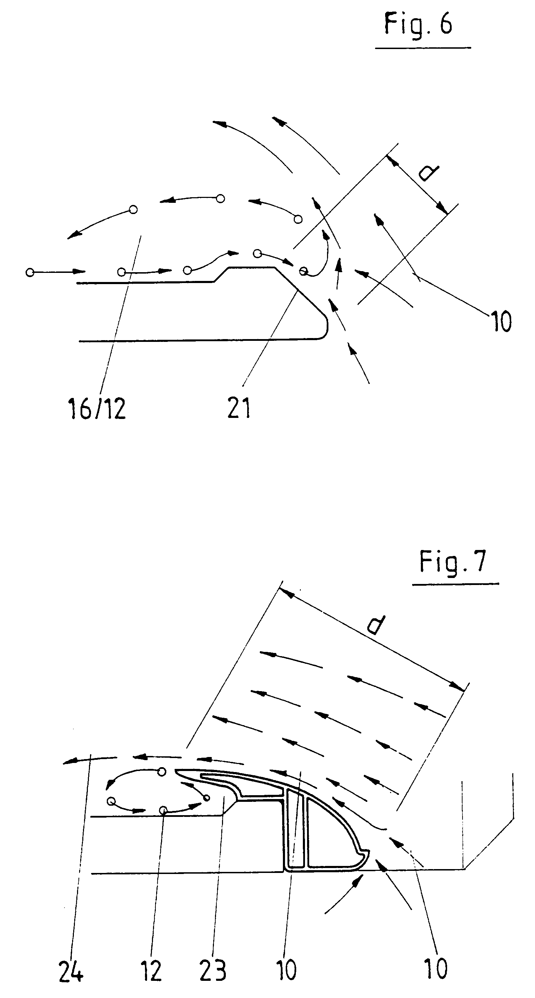

In den Fig. 1 bis 3 sowie in Fig. 7 ist ein Ausführungsbeispiel des erfindungsgemäßen Abzuges dargestellt.

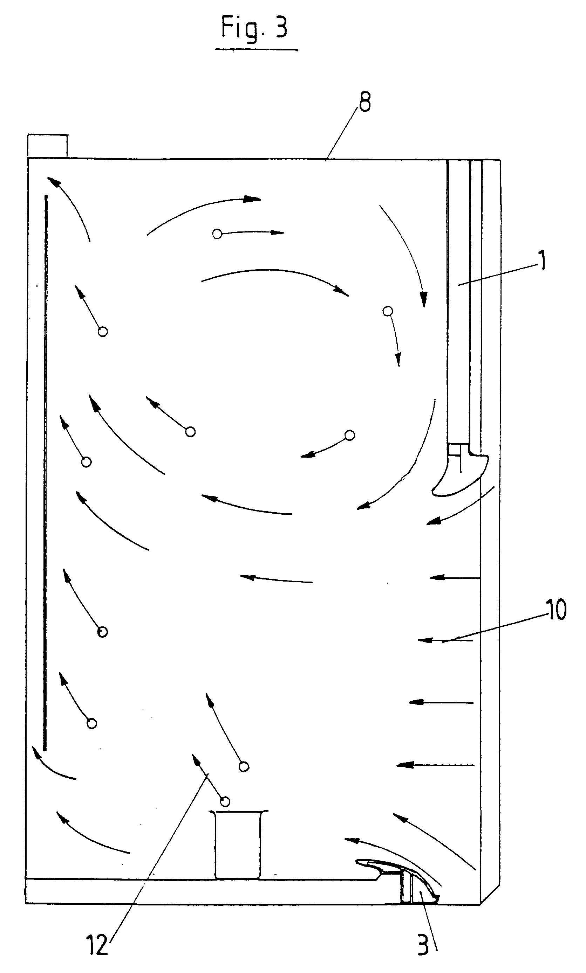

Wie es in Fig. 1 und 3 dargestellt ist werden dabei günstige Strömungsverhältnisse bei geschlossener Schiebetür 1, d. h. horizontaler Einströmöffnung erreicht, und ist ein Austreten von Schadstoffen bei völlig geöffneter Schiebetür verhindert.

Fig. 1 zeigt die erzielten Strömungsverhältnisse bei geschlossener Schiebetür 1, bei denen sich die Strömung im Innenraum des Abzuges sehr turbulenzarm gestaltet. Fig. 3 zeigt das Strömungsbild bei geöffneter Schiebetür 1.

Wie es in Fig. 1 dargestellt ist strömt im Bereich zwischen dem Griffprofil 2 und dem Boden 4 die Primärluft 10 ein. Zwischen dem Griffprofil 2 und der Decke 8 des Innenraumes bildet sich eine mit waagerechter Achse rotierende Strömung aus, so daß entstehende Schadstoffe 12 von der nachströmenden Primärluft 10 nach hinten gedrückt und teilweise von den Absaugschlitzen als Absaugströme 6a, 6b abgesaugt werden. Die restlichen Schadstoffe rotieren in der Raumwalze mit.

Derartige Strömungsverhältnisse werden dadurch erzielt, daß ein spezielles Profil 3 an der Vorderkante des Bodens 4 dem Griffprofil 2 der Schiebetür 1 gegenüber vorgesehen ist. Durch diese Ausbildung ergibt sich eine Einströmöffnung, deren den Strömungsverlauf begünstigende Wirkung durch ein optimiertes Griffprofil 2 weiter erhöht werden kann. Ein derartiges optimiertes Griffprofil 2 hat eine gewölbte Unterseite, die die in den Abzug strömende Primärluft 10 beschleunigt.

Das Profil 3 an der Vorderkante des Bodens 4 des Abzuges hat eine einem Flugzeugtragflächenprofil ähnliche Form, das die einströmende Luft ohne Wirbelbildungen durch Strömungsablösungen im vorderen Bodenbereich horizontal nach hinten lenkt.

Fig. 7 zeigt das umströmte Profil 3 im einzelnen. Die Strömungsverhältnisse im Bereich derartiger Profile können mit Hilfe der Reynoldzahl, charakterisiert werden. Die Reynoldzahl Re ist durch die Gleichung Re = d • w/c definiert, wobei d die charakteristische Länge und w die Strömungsgeschwindigkeit bezeichnen, während c eine Fluidkonstante (Luft) ist.

Die die Länge der Einströmfläche d sowie die Strömungsgeschwindigkeit w klein sind, ergibt sich eine Re-Zahl, die unter 2300 liegt, was eine laminare Strömung bzw. Grenzschicht an der Profiloberfläche bedeutet.

Laminare Strömungen neigen unter den gegebenen Verhältnissen zu Strömungsablösungen. Um dies zu verhindern, besitzt das Einströmprofil 3 an der Vorderkante eine leistenartige Abrißkante, d. h. einen Turbulator 3b. Durch ihn wird ein Umschlag der laminaren Grenzschicht in eine turbulente Grenzschicht bewirkt. Sie sorgt für einen gleichmäßigen Strömungsverlauf bis zur Hinterkante des Profils und verhindert vorzeitige Ablösungen und damit störende Wirbelbildungen wie im laminaren Fall.

Bedingt durch die Länge des Profiles 3 werden auch die darüberliegenden Luftschichten waagerecht nach hinten mitgenommen. Die vertikale Komponente der einströmenden Primärluft 10 wird horizontal umgelenkt, so daß sich im Abzug eine ungestörte Walzenbildung einstellt (Fig. 1).

Aufgrund der niedrigen Einströmgeschwindigkeit bei voll geöffneter Schiebetür 1, die beispielsweise bei 0,1 m/sec. liegt, kriechen in der Grenzschicht an der Oberfläche unvermeidlich kontaminierte schwere Gase 12 entgegen der Strömungsrichtung nach vorne. Bei der in der Zeichnung dargestellten Ausführung des Profils 3 an der Vorderkante des Bodens mit am hinteren Profilteil ausgebildetem Hohlraum 23 strömen diese Gase in diesen Hohlraum 23 zwischen dem Boden 4 und dem Profil 3. Sie wandern dem Einströmungsprofil folgend anschließend wieder nach hinten.

Aufgrund der scharfen Abrißkante 3c des Einströmprofiles 3 geht die Strömung 10 von der Profiloberfläche gerade nach hinten weiter, es entsteht eine Grenzschicht zwischen den Strömungen 10 und 12. Diese Grenzschicht wirkt wie eine Verlängerung des Profiles 3 und stabilisiert den entstehenden Strom 24 als Verlängerung der Strömung 10. Das hat den Vorteil, daß die horizontale Komponente der Primärströmung 10 und somit die Strömung im gesamten Innenraum stabilisiert ist und daß entstehende kontaminierte Gase sicher zurückgehalten werden.

Der erfindungsgemäße Abzug mit dem an der Bodenvorderkante vorgesehenen Flugzeugtragflächenprofil 3 hat somit den Vorteil, daß bei geschlossener Schiebetür 1 sich durch die dann gebildete Einströmdüse eine stabile Strömung ausbildet, und gleichzeitig der Körperschutz gewährleistet ist, während bei einer Bewegung der Schiebetür keine Störungen des Strömungsbildes auftreten und das Austreten von Gasen aus dem Abzug bei voll geöffneter Schiebetür aufgrund der stabilen Einströmung der Luft ausgeschlossen ist.

Bei der erfindungsgemäßen Ausbildung ist somit ein sogenanntes Flugzeugtragflächenprofil an der Vorderkante des Bodens des Abzuges vorgesehen. Unter diesem Begriff sind allgemein profilartige Ausbildungen zu verstehen, die gewährleisten, daß der an der Anströmfläche auftretende Luftstrom von der Oberfläche nicht abreißt sondern dem Oberflächenprofil nach hinten folgt. Unter dem verwandten Begriff des Flugzeugtragflächenprofiles sind daher alle derartigen Profile zu verstehen.

**Patentansprüche**

1. Abzug mit Einströmprofil und
   - einem kastenartigen Gehäuse, in dem sich ein Arbeitsraum befindet und das an einer Seite offen ist, und mit
   - einer Schiebetür, die an der offenen Seite des Gehäuses vertikal in eine geöffnete und eine geschlossene Stellung bewegbar ist und an ihrer in Schließrichtung vorderen Kante als Griffprofilkante ausgebildet ist, wobei in der geschlossenen Stellung die Schiebetür vor den Gehäuseboden heruntergezogen ist, so daß ein vertikaler Spalt zwischen der Vorderenkante des Gehäusebodens und der Vorderkante der Schiebetür gebildet ist, dadurch gekennzeichnet, daß zur Umlenkung der einströmenden Luft aus der vertikalen in die horizontale Richtung die Vorderkante des Gehäusebodens (4) als flugzeugtragflächenartiges Profil (3) mit nach vorne gerichteter Anströmfläche ausgebildet ist.

2. Abzug nach Anspruch 1, dadurch gekennzeichnet, daß zwischen dem rückwärtigen Ende des Profils (3) und der oberen Außenfläche des Bodens (4) ein unterschneidungsartiger Hohlraum (23) gebildet ist.

3. Abzug nach Anspruch 1 oder 2, dadurch gekennzeichnet, daß an der Anströmfläche des Profils (3) an der Vorderkante des Bodens (4) ein Turbulator (3b) vorgesehen ist.

4. Abzug nach einem der vorhergehenden Ansprüche, dadurch gekennzeichnet, daß die Griffprofilkante (2) an der Vorderkante der Schiebetür (1) eine gewölbte Unterseite hat.

5. Abzug nach Anspruch 1 oder 2, dadurch gekennzeichnet, daß das rückwärtige Ende des Profils (3) als Strömungsabrißkante (3c) ausgebildet ist.

## Claims

1. Fume cupboard with an inlet profile and
   - a box-like housing in which there is a working area and which is open at one side, and with
   - a sliding door which is movable vertically on the open side of the housing to an open position and to a closed position and which is formed as a profiled gripping edge on its front edge in the closure direction, the sliding door being pulled down in front of the housing floor in the closed position so that a vertical gap is formed between the front edge of the housing floor and the front edge of the sliding door, characterized in that, in order to deflect the air flowing in from the vertical direction to the horizontal direction, the front edge of the housing floor (4) is formed as an aerofoil-like profile (3) with a forwardly-directed flow-past surface.

2. Fume cupboard according to Claim 1, characterized in that an undercut-like cavity (23) is formed between the rear end of the profile (3) and the upper, outer surface the floor (4).

3. Fume cupboard according to Claim 1 or Claim 2, characterized in that the flow-past surface of the profile (3) has a turbulator (3b) on the front edge of the floor (4).

4. Fume cupboard according to any one of the preceding claims, characterized in that the profiled gripping edge (2) has a convex underside on the front edge of the sliding door (1).

5. Fume cupboard according to Claim 1 or Claim 2, characterized in that the rear end of the profile (3) is formed as a flow-breaking edge (3c).

## Revendications

1. Hotte pour laboratoire avec entrée d'air profilée et un carter en forme de boîte, dans lequel est ménagé un espace de travail et qui est ouvert sur un côté, cette hotte comportant également une porte coulissante déplaçable verticalement sur le côté ouvert du boîtier, dans une position ouverte et dans une position fermée, et dont le bord avant dans la direction de fermeture est profilé en poignée, cette porte étant dans sa position de fermeture tirée de dessous devant le fond du boîtier, de telle sorte que soit formée une fente verticale entre le bord avant du fond du boîtier et le bord avant de la porte coulissante, caractérisée en ce que pour la déflexion de l'air entrant, à partir de la direction verticale dans la position horizontale le bord avant du fond du boîtier (4) présente un profil (3) ayant une surface d'appui en forme d'avion avec une surface de soufflage dirigée vers l'avant.

2. Hotte selon la revendication 1, caractérisée en ce que entre l'extrémité arrière du profil (3) et la surface extérieure supérieure du fond (4) il est formé un volume creux (23) en forme d'évidement.

3. Hotte selon l'une des revendications 1 et 2, caractérisée en ce qu'un élément générateur de turbulence (3b) est prévu sur la surface de soufflage du profil (3) sur le bord avant du fond (4).

**4.** Hotte selon l'une quelconque des revendications précédentes, caractérisée en ce que le bord profilé en poignée sur le bord avant de la porte coulissante (1) présente une face inférieure cintrée.

**5.** Hotte selon l'une des revendications 1 et 2, caractérisée en ce que l'extrémité arrière du profil (3) est conformée en bord (3c) de détachement de courant.

## Fig. 1

## Fig. 2

## Fig. 3

# Fig. 4

## Fig.5

Fig. 6

16/12    21    d    10

Fig. 7

24    12    23    10    d    10